# EUROPÄISCHE PATENTSCHRIFT

(11) **EP 1 886 762 B1**
(45) Veröffentlichungstag und Bekanntmachung des Hinweises auf die Patenterteilung: **15.09.2010**
(21) Anmeldenummer: 07014278.1
(22) Anmeldetag: 20.07.2007
(51) Int. Cl.: B23Q 3/155, B23Q 3/157

(54) **Werkzeugmaschine**
Machine tool
Machine-outil

(30) Priorität: 09.08.2006 DE 102006037437
(43) Veröffentlichungstag der Anmeldung: 13.02.2008
(73) Patentinhaber: Haas Schleifmaschinen GmbH, 78647 Trossingen (DE)
(72) Erfinder: Braun, Hans-Dieter, 78665 Frittlingen (DE)
(74) Vertreter: Patentanwälte Westphal, Mussgnug & Partner

(56) Entgegenhaltungen:
- EP-A- 0 319 914
- EP-A- 1 260 306
- DE-A1- 3 713 515
- JP-A- 61 044 546

## Beschreibung

Die Erfindung betrifft eine Werkzeugmaschine gemäß dem Oberbegriff des Patentanspruchs 1, (siehe z.B. EP-A-1 260 306).

Bei Werkzeugmaschinen zur Bearbeitung von Werkstücken, z. B. zum Schleifen, Fräsen, Bohren, Reiben, Drehen, Polieren und Gewindeschneiden werden häufig Werkzeugmagazine verwendet, die mehrere Werkzeuge aufnehmen können. Insbesondere wenn ein Werkstück in aufeinanderfolgenden Bearbeitungsschritten mit unterschiedlichen Werkzeugen bearbeitet wird, ist es wichtig, dass die in dem Magazin zur Verfügung gehaltenen Werkzeuge schnell in die Werkzeugspindel eingewechselt werden können.

Aus der DE 198 44 242 C2 ist eine Schleifmaschine bekannt, bei welcher ein Werkzeugmagazin mehrere in einer linearen Reihe angeordnete Werkzeuge aufnimmt. Das Werkzeugmagazin ist linear verfahrbar, um ein ausgewähltes Werkzeug in eine Wechselposition zu bringen, in welcher das Werkzeug direkt durch die Werkzeugspindel aus dem Magazin entnommen oder in das Magazin abgelegt werden kann. Die lineare Ausbildung des Werkzeugmagazins beschränkt die Zahl der Magazinplätze und damit die Kapazität des Werkzeugmagazins.

Aus der DE 37 31 280 C2 ist eine Werkzeugmaschine bekannt, bei welcher ein Werkzeugmagazin in Form eines um eine vertikale Achse drehbaren Magazinrades vorgesehen ist. Das Magazinrad ist neben der eigentlichen Werkzeugmaschine angeordnet und die Werkzeuge werden über einen schwenkbaren Greiferarm zwischen der Werkzeugspindel und dem Werkzeugmagazin gewechselt. Die Anordnung des Magazinrades neben der Werkzeugmaschine ist platzaufwendig, wobei der konstruktive Aufwand durch den schwenkbaren Greiferarm erhöht ist.

Der Erfindung liegt die Aufgabe zugrunde, eine Werkzeugmaschine mit einem Werkzeugmagazin zu schaffen, die einen schnellen Werkzeugwechsel und ein günstiges Verhältnis von Aufnahmekapazität und Platzbedarf des Werkzeugmagazins ermöglicht.

Diese Aufgabe wird erfindungsgemäß gelöst durch eine Werkzeugmaschine mit den Merkmalen des Patentanspruchs 1.

Vorteilhafte Ausführungen der Erfindung sind in den Unteransprüchen angegeben.

Erfindungsgemäß weist das Werkzeugmagazin ein Magazinrad auf, welches um eine vertikale Achse drehbar angrenzend an den Arbeitsraum der Werkzeugmaschine angeordnet ist. Die Werkzeugspindel der Werkzeugmaschine ist horizontal und vertikal verfahrbar, so dass die Werkzeugspindel von oben in das Magazinrad eintauchen kann, um die Werkzeuge im Pick-up-Verfahren unmittelbar aus dem Werkzeugmagazin zu entnehmen und in dieses abzulegen. Dadurch ergeben sich kurze Werkzeugwechselzeiten und ein geringer konstruktiver Aufwand. Die kreisförmige Ausbildung des Werkzeugmagazins erlaubt zudem eine größere Aufnahmekapazität für die bereit zu haltenden Werkzeuge.

Vorzugsweise ist das Werkzeugmagazin mit Werkzeughaltern ausgebildet, die eine sich nach oben öffnende Aufnahme für die Werkzeuge aufweisen. Die Werkzeuge können daher von oben in die Aufnahme eingelegt bzw. nach oben aus der Aufnahme herausgehoben werden. In der Aufnahme werden die Werkzeuge durch ihr Eigengewicht gehalten, wobei vorzugsweise die Aufnahme in die Greifrille des Werkzeuges eingreift, so dass die Werkzeuge auch gegen eine Verschiebung in ihrer Achsrichtung und gegen ein Verkippen zuverlässig gehalten werden. Weitere Klemm- oder Verriegelungsvorrichtungen zur Sicherung der Werkzeuge in den Werkzeughaltern sind nicht erforderlich.

In einer Ausbildung der Werkzeugmaschine ist der Arbeitsraum von der Bedienseite gesehen nach hinten ausgewölbt, um ausreichend Freiraum für eine Drehung der horizontalen Werkzeugspindel um die vertikale Achse (C-Achse) zu schaffen. In dieser Ausführung ist das Magazinrad vorzugsweise mit einem segmentförmigen Ausschnitt ausgebildet, dessen Form der Auswölbung des Arbeitsraumes entspricht. Während der Bearbeitungshauptzeit ist das Magazinrad in seine Grundstellung gedreht, in welcher dieser segmentförmige Ausschnitt mit der Auswölbung des Arbeitsraumes zusammenfällt. Der Arbeitsraum kann dann gegen das Magazinrad abgeschottet werden, wozu Trennwände vorgesehen sind, die sich dabei in die segmentförmige Kontur des Ausschnittes einfügen. Für einen Werkzeugwechsel werden die Trennwände wegbewegt, so dass das Magazinrad gedreht werden kann und in den Arbeitsraum eingreift. Durch diese Ausbildung kann die Rotationsachse des Magazinrades nahe an dem Arbeitraum angeordnet werden, so dass der Stellflächenbedarf der Werkzeugmaschine durch das Werkzeugmagazin nicht stark vergrößert wird. Außerdem ist der Verfahrweg der Werkzeugspindel in der horizontalen Achse (Y-Achse) in die Wechselposition verkürzt.

In einer Weiterbildung der Erfindung kann in das Magazinrad modular noch ein weiteres konzentrisches Magazinrad eingesetzt werden, um die Speicherkapazität zu erhöhen und eine flexible Kombinationsmöglichkeit für unterschiedliche Werkzeuge oder Zusatzvorrichtungen zu schaffen.

Im Folgenden wird die Erfindung anhand eines in der Zeichnung dargestellten Ausführungsbeispieles näher erläutert. Es zeigen
- Fig. 1: eine Werkzeugmaschine in perspektivischer Ansicht in der Arbeitsstellung,
- Fig. 2: dieselbe Ansicht der Werkzeugmaschine ohne Werkzeugspindel in der Arbeitsstellung,
- Fig. 3: dieselbe Darstellung der Werkzeugmaschine ohne Werkzeugspindel in der Wechselposition eines äußeren Magazinrades,
- Fig. 4: dieselbe Darstellung der Werkzeugmaschine in der Wechselposition des äußeren Magazinrades und der Werkzeugspindel,
- Fig. 5: dieselbe Darstellung der Werkzeugmaschine mit der Werkzeugspindel und einem inneren Magazinrad in der Wechselposition,
- Fig. 6: dieselbe Darstellung der Werkzeugmaschine mit der Werkzeugspindel, einem Schleifwerkzeug des äußeren Magazinrades und einem Schleifscheibenschutz des inneren Magazinrades in der Wechselposition,
- Fig. 7: in perspektivischer Detaildarstellung die Werkzeugspindel und das äußere Magazinrad,
- Fig. 8-10: in einer Seitenansicht die Abgabe eines Werkzeuges von der Werkzeugspindel in das äußere Magazinrad,
- Fig. 11: in perspektivischer Darstellung die Werkzeugspindel und das äußere Magazinrad nach der Abgabe des Werkzeuges in das äußere Magazinrad,
- Fig. 12: eine perspektivische Teildarstellung mit dem äußeren Magazinrad, dem inneren Magazinrad und der Werkzeugspindel,
- Fig. 13: eine axiale Draufsicht auf das äußere Magazinrad und das innere Magazinrad,
- Fig. 14-18: die Abgabe eines Schleifscheibenschutzes in das innere Magazinrad,
- Fig. 19-24: in einer vereinfachten Darstellung die gemeinsame Aufnahme eines Schleifwerkzeuges und eines Schleifscheibenschutzes durch die Werkzeugspindel.

In der dargestellten Ausführung ist die Werkzeugmaschine beispielhaft als Schleifmaschine dargestellt. Es ist ohne Weiteres ersichtlich und aus der folgenden Beschreibung erkennbar, dass die Erfindung auch bei anderen Werkzeugmaschinen, insbesondere Bohr-, Fräs- und Drehmaschinen eingesetzt werden kann.

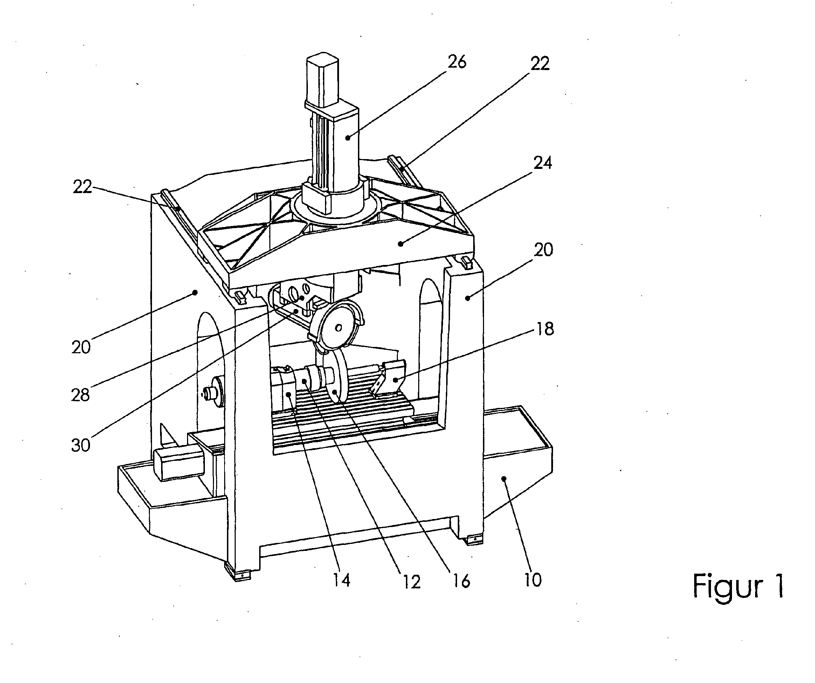

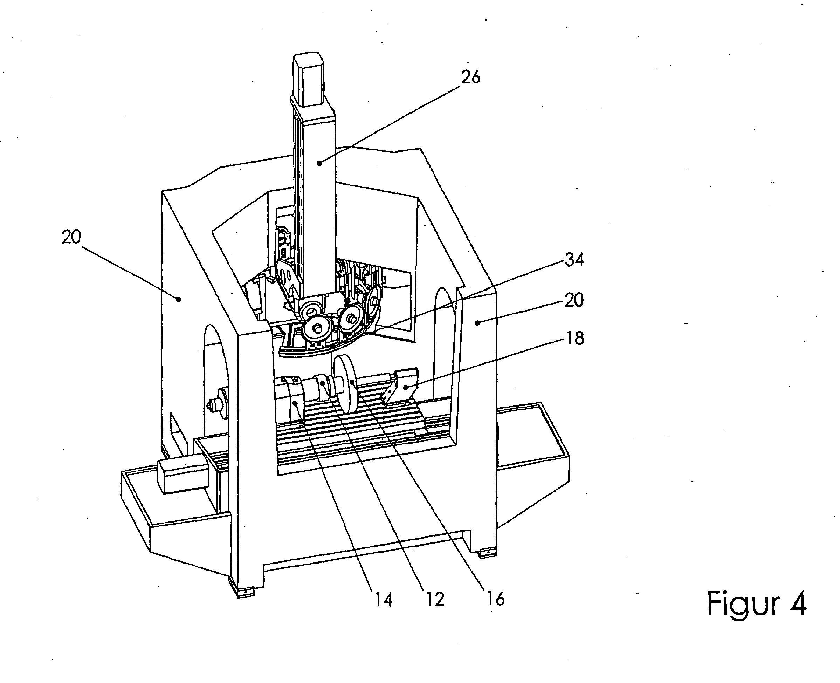

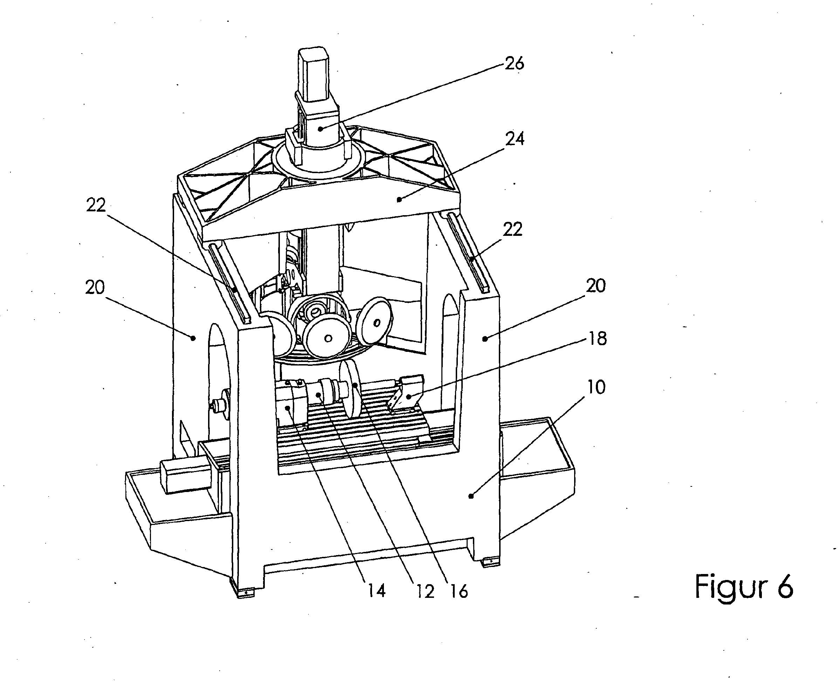

Wie die Figuren 1 bis 6 zeigen, weist die Werkzeugmaschine ein horizontales Maschinenbett 10 auf, auf welchem horizontal in der X-Achse verfahrbar eine Werkstückspindel 12 gelagert ist. Die Werkstückspindel 12 ist horizontal in der X-Achse angeordnet und über einen Werkstückspindelantrieb 14 rotierend antreibbar. An der Werkstückspindel kann ein Werkstück 16 gespannt werden, das gegebenenfalls durch einen Reitstock 18 abgestützt wird. An beiden Seiten des Maschinenbettes 10 ist jeweils eine vertikal nach oben gerichtete Seitenwange 20 ausgebildet. Auf den horizontalen in der Y-Achse verlaufenden Oberseiten der Seitenwangen 20 ist jeweils eine Y-Führung 22 angeordnet. Auf diesen Y-Führungen 22 ist eine Brücke 24 gelagert, die in der Y-Achse gesteuert angetrieben verfahrbar ist und den Arbeitsraum der Werkzeugmaschine zwischen den Seitenwangen 20 überspannt. Zentrisch in der Brücke 24 ist ein Z-Schlitten 26 gelagert, der gesteuert antreibbar in der vertikalen Z-Achse verfahrbar und gesteuert antreibbar um seine vertikale Achse (C-Achse) drehbar ist. Am unteren Ende des Z-Schlittens 26 ist ein Träger 28 befestigt, an welchem eine drehantreibbare Werkzeugspindel 30 mit horizontaler Achse gelagert ist, die in der horizontalen Achse gesteuert verfahrbar ist.

Insoweit entspricht der Aufbau der Werkzeugmaschine der in der deutschen Patentanmeldung 10 2006 011 551.1 beschriebenen Werkzeugmaschine und auf den gesamten Inhalt dieser Patentanmeldung wird zum Zwecke der Offenbarung verwiesen.

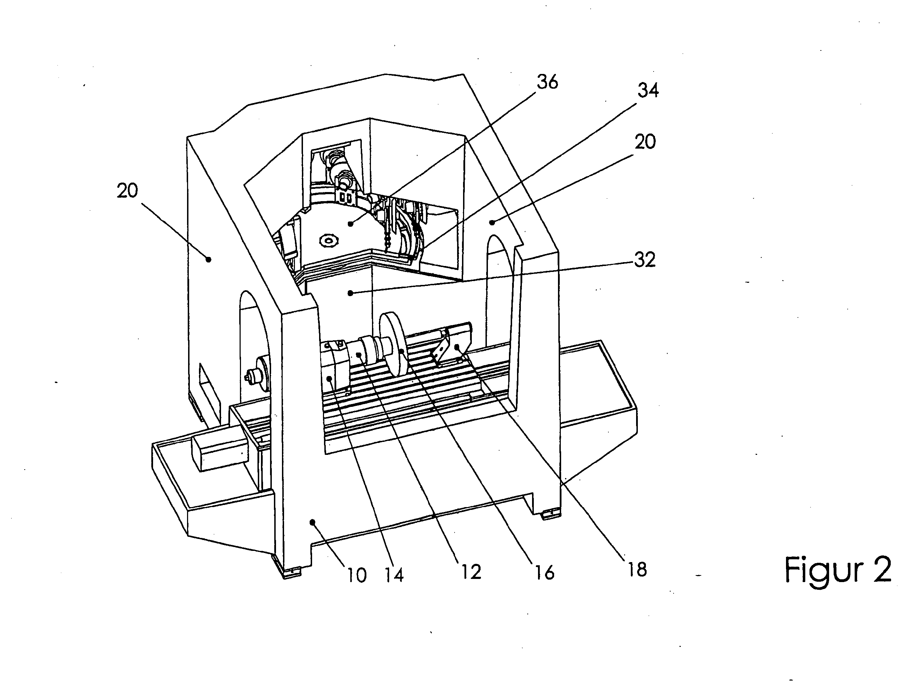

In der Darstellung der Figur 1 befindet sich die Werkzeugspindel 30 in der Arbeitsposition, in welcher ein an der Werkzeugspindel 30 aufgenommenes Werkzeug das Werkstück 16 bearbeitet. Das Werkzeug ist beispielsweise eine Schleifscheibe zur Schleifbearbeitung des Werkstückes 16. In Figur 2 sind zur besseren Erkennbarkeit die Brücke 24 und der Z-Schlitten 26 mit der Werkzeugspindel 30 weggelassen. Es ist zu erkennen, dass der Arbeitsraum auf der von der Bedienerseite (in den Figuren 1 bis 6 die Vorderseite) abgewandten Rückseite nach hinten, z. B. polygonal, ausgewölbt ist, um die Drehung der horizontalen Werkzeugspindel 30 um die vertikale Rotationsachse (C-Achse) zu ermöglichen. Die Rückseite des Arbeitsraumes ist durch wegbewegbare Trennwände 32 abgeschlossen. Hinter diesen Trennwänden 32 befindet sich das nachfolgend beschriebene Werkzeugmagazin, in welchem Werkzeuge gespeichert und zum Einwechseln in die Werkzeugspindel 30 bereit gestellt sind.

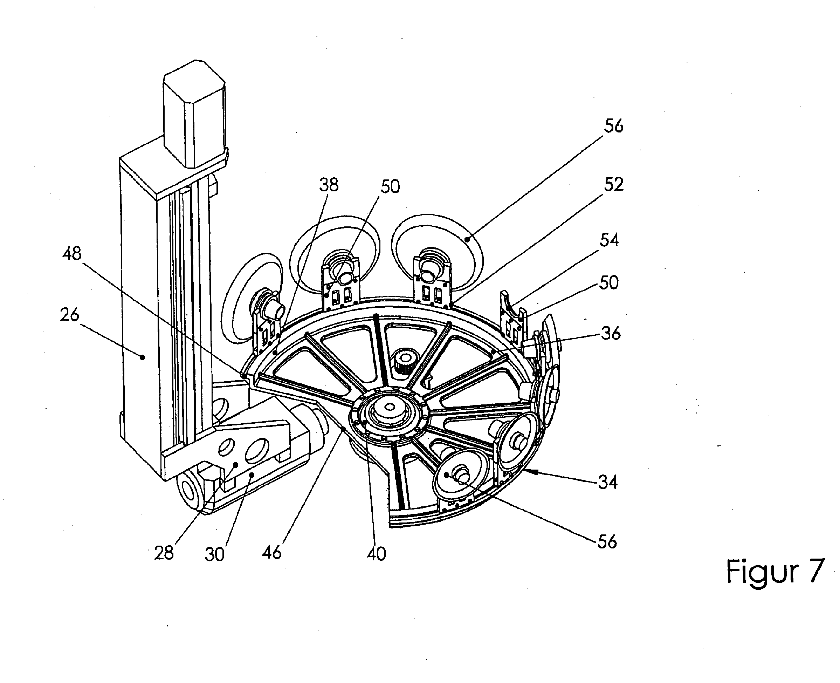

In den Figuren 7 bis 11 ist eine einfache Ausführung des Werkzeugmagazins dargestellt.

Das Werkzeugmagazin weist ein Magazinrad 34 auf, welches um eine vertikale, zur Z-Achse parallele Achse gesteuert drehbar angetrieben wird. Das Magazinrad 34 besteht aus einer in der horizontalen Ebene liegenden kreisförmigen Magazinscheibe 36, an deren Außenumfang ein vertikal nach oben weisender Magazinring 38 angeordnet ist. Die Magazinscheibe 36 kann als geschlossene Scheibe ausgebildet sein, ist vorzugsweise jedoch als Speichenscheibe ausgebildet, wie dies in der Zeichnung dargestellt ist. Die Magazinscheibe 36 sitzt zentrisch auf einer vertikalen Antriebswelle 40, die unterhalb der Magazinscheibe 36 über einen Zahnriemen 42 von einem NC-gesteuerten Motor 44 antreibbar ist.

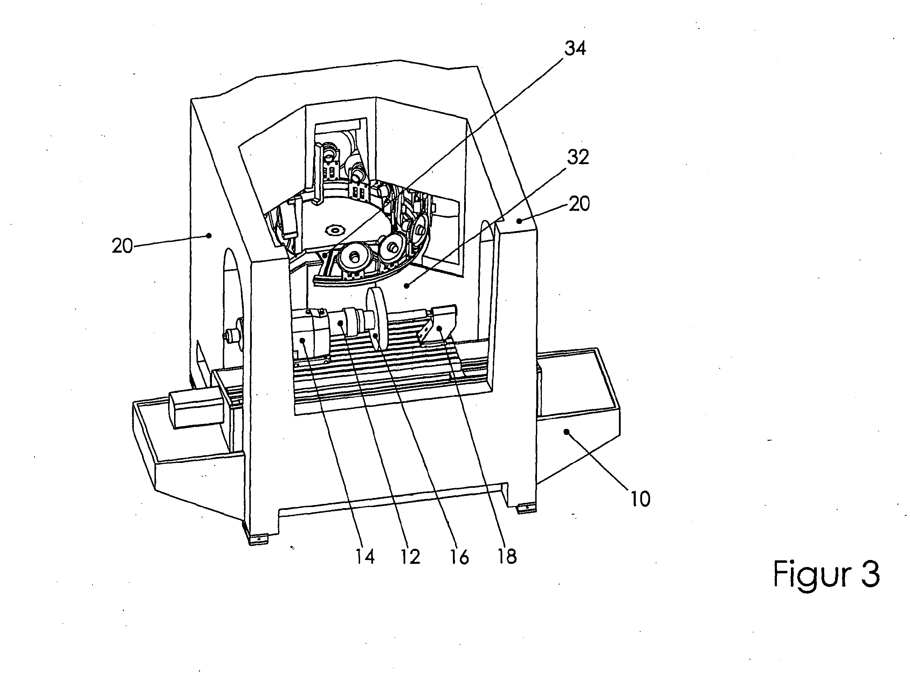

Die Magazinscheibe 36 und damit das gesamte Magazinrad 34 ist in einem Winkelbereich mit einem segmentförmigen Ausschnitt 46 ausgebildet. Die Form dieses Ausschnittes 46 entspricht in ihrem Verlauf dem polygonalen Verlauf der Trennwände 32. Ist das Magazinrad 34 in seiner Drehstellung so ausgerichtet, dass der Ausschnitt 46 dem Arbeitsraum zugewandt ist, so können die Trennwände 32 innerhalb dieses Ausschnittes 46 in die Schließstellung bewegt werden. Sind die Trennwände 32 in ihrer Offenstellung zurückgefahren, so kann das Magazinrad 34 um seine vertikale Achse gedreht werden und greift mit seinem Umfang in den Arbeitsraum der Werkzeugmaschine hinein. Diese beiden Stellungen sind in den Figuren 2 und 3 gezeigt. Die Ausbildung des Magazinrades 34 mit dem segmentartigen Ausschnitt 46 ermöglicht es, die Antriebswelle 40 baulich nahe an dem nach hinten ausgewölbten Arbeitraum anzuordnen, sodass die Grundfläche der Werkzeugmaschine durch das Werkzeugmagazin wenig vergrößert wird.

In den oberen Rand des Magazinringes 38 ist eine in diesem Magazinring 38 koaxial umlaufende T-Nut eingearbeitet. In diese T-Nut 48 sind Werkzeughalter 50 eingesetzt, die mit einem Fuß 52 auf dem Magazinring 38 aufsitzen und in die T-Nut 48 eingreifen. Mit diesem Fuß 52 können die Werkzeughalter 50 in der T-Nut in Umfangsrichtung des Magazinringes 38 verschoben und in der gewünschten Position geklemmt werden. Die Werkzeughalter 50 weisen von dem Fuß 52 vertikal nach oben und bilden jeweils eine sich U-förmig nach oben öffnende Aufnahme 54 für ein Werkzeug. Die Aufnahmen 54 sind entsprechend den zu magazinierenden Werkzeugen ausgebildet. Im dargestellten Ausführungsbeispiel sind Werkzeuge 56 in Form von Schleifscheiben dargestellt, die einen genormten Kegelschaft für eine Hohlschaftkegel-Werkzeugaufnahme aufweisen. Die Aufnahme 54 ist so ausgebildet, dass das Werkzeug 56 von oben in die Aufnahme 54 eingelegt werden kann, wobei der Werkzeughalter 50 mit seiner Aufnahme 54 in die Greifrille des Kegelschaftes eingreift. Das Werkzeug 56 wird in der Aufnahme 54 ohne zusätzliche Befestigung und Verriegelung durch sein Eigengewicht sicher gegen Zentrifugalkräfte und Kippmomente gehalten. Die Werkzeuge 56 werden in die Werkzeughalter 50 so eingesetzt, dass ihre Kegelschäfte von dem Magazinring 38 radial nach innen gerichtet sind, während das eigentliche Werkzeug radial nach außen gerichtet ist. Da der Durchmesser des eigentlichen Werkzeugs in der Regel größer ist als der Durchmesser des Kegelschaftes, ergibt sich hierdurch eine optimale Platzausnützung des Magazinumfanges. Die Werkzeughalter 50 können in der T-Nut 48 in Umfangsrichtung des Magazinringes 38 so verschoben und im gegenseitigen Winkelabstand angeordnet werden, dass entsprechend dem Durchmesser der jeweiligen Werkzeuge 56 eine optimale Ausnützung des Umfanges des Magazinrades 34 erreicht wird. In der jeweils optimierten Winkelposition werden die Werkzeughalter 50 in der T-Nut 48 des Magazinringes 38 geklemmt und fixiert. Die Positionen der Werkzeughalter 50 werden als Winkelpositionswerte in der Steuerung des Motors 44 hinterlegt und können dem jeweiligen Anwendungsfall entsprechend variiert und angepasst werden.

Der Werkzeugwechsel wird anhand der Figuren 7 bis 11 erläutert.

Figur 7 zeigt die Arbeitsstellung der Werkzeugmaschine. Das Magazinrad 34 befindet sich in der in Figur 2 gezeigten Stellung, in welcher der Ausschnitt 46 mit der Lage der Trennwände 32 übereinstimmt. Im Bereich dieses Ausschnittes 46 ist das Magazinrad 34 durch die in Figur 7 nicht dargestellten Trennwände 32 von dem Arbeitsraum abgeschirmt. Die Bearbeitung eines Werkstückes 16 kann durchgeführt werden. Das Werkstück 16 wird auf dem Maschinenbett 10 in der X-Achse bewegt, wobei es gegebenenfalls auch noch um seine eigene Achse gedreht werden kann (A-Achse). Das Werkzeug 56 ist in der Werkzeugspindel 30 gespannt. Das Werkzeug 56 führt mittels des Z-Schlittens 26 eine Vertikalbewegung durch, wobei die horizontale Achse der Werkzeugspindel 30 um die vertikale Achse des Z-Schlittens 26 drehbar ist. Der Z-Schlitten 26 kann mittels der Brücke 24 in der Y-Achse verfahren werden. Zusätzlich kann die Werkzeugspindel 30 in ihrer Achse bezüglich des Z-Schlittens 26 in dem Träger 28 horizontal verfahren werden. Gegebenenfalls kann zusätzlich auch der Neigungswinkel der Achse der Werkzeugspindel 30 gegen die Horizontalebene verstellt werden.

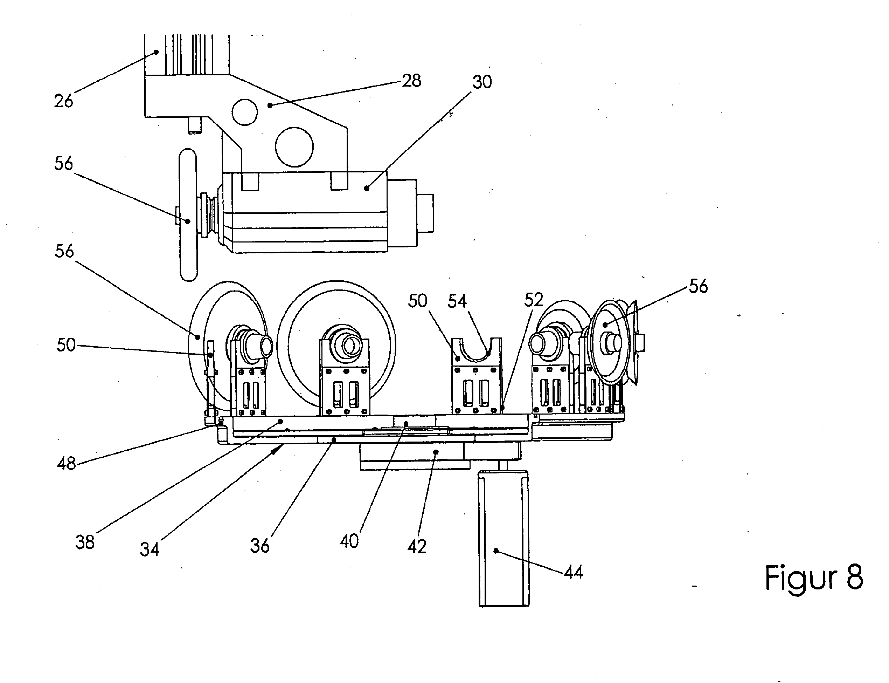

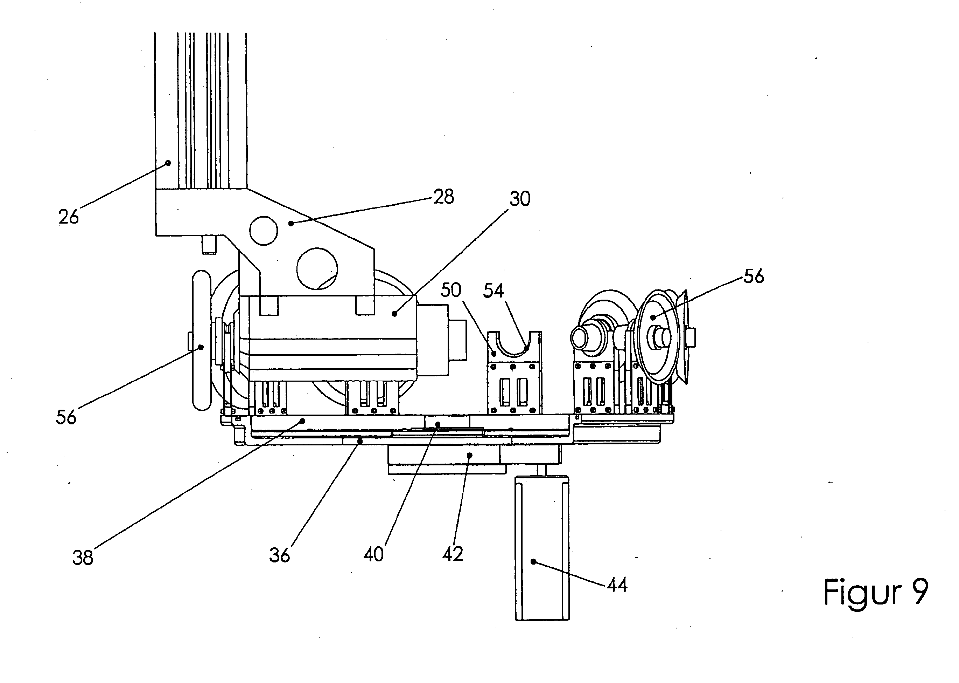

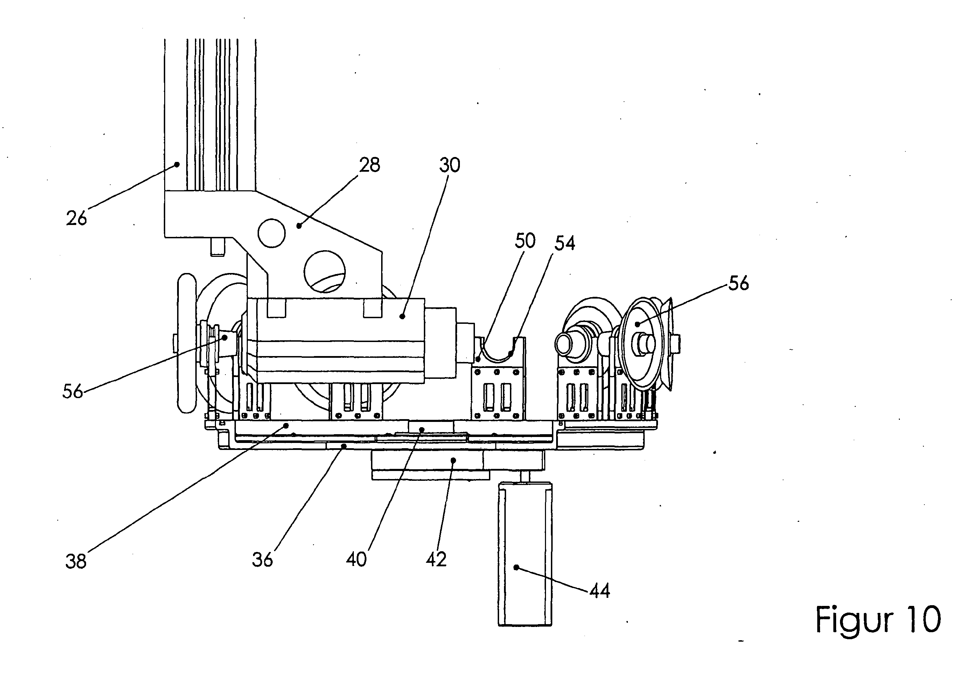

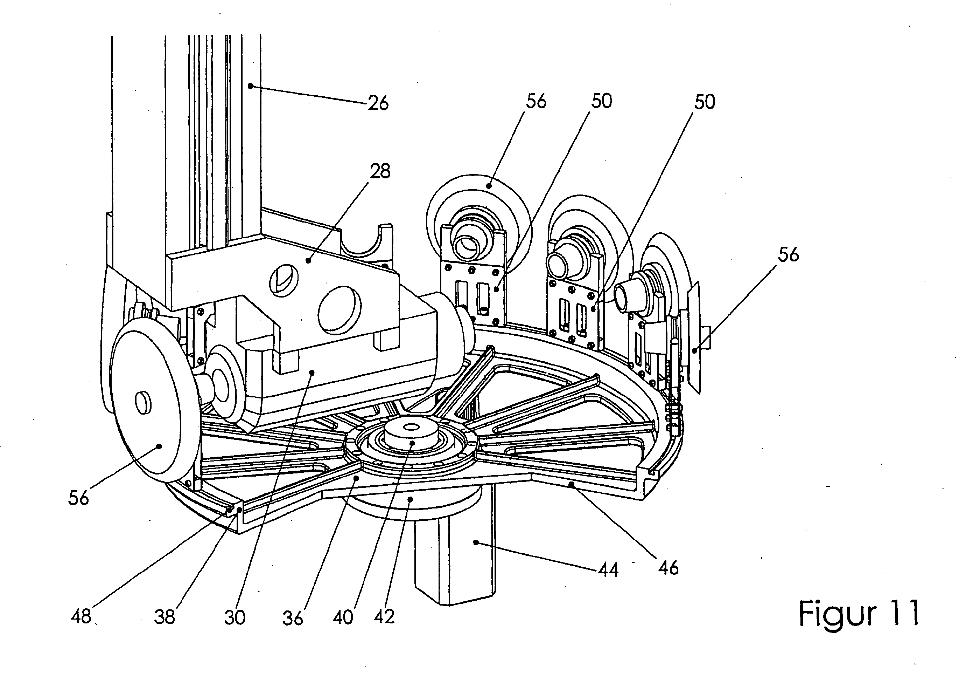

Um einen Werkzeugwechsel durchzuführen, werden zunächst die Trennwände 32 weggefahren, sodass das Magazinrad 34 in den Arbeitsraum hineindrehen kann. Wie Figur 8 zeigt, wird das Magazinrad 34 über den gesteuerten Antrieb des Motors 44 so gedreht, dass ein freier Werkzeughalter 50' in die Wechselposition gebracht wird, d. h. in der Ebene der Y-Bewegung des Z-Schlittens 26 positioniert ist. Der Z-Schlitten 26 wird so gedreht, dass der Träger 28 mit der Werkzeugspindel 30 ebenfalls in dieser Ebene ausgerichtet ist. Nun fährt die Brücke 24 in der Y-Achse nach hinten, bis sich die Werkzeugspindel 30 oberhalb des Magazinrades 34 und innerhalb des Umfanges des Magazinringes 38 befindet, wie dies in Figur 8 dargestellt ist. Dann wird der Z-Schlitten 26 vertikal nach unten gefahren, wodurch das Werkzeug 56 mit seiner Greifrille in die Aufnahme 54 des freien Werkzeughalters 50' eingelegt wird, wie dies in Figur 9 gezeigt ist. Anschließend fährt der Z-Schlitten 26 in der Y-Achse weiter nach hinten, wodurch die Werkzeugspindel 30 radial von dem Magazinring 38 nach innen bewegt wird und die HSK-Aufnahme der Werkzeugspindel 30 den Kegelschaft des Werkzeuges 56 freigibt, wie dies in den Figuren 10 und 11 gezeigt ist. Alternativ zu einem Verfahren des Z-Schlittens 26 in der Y-Achse kann auch die Werkzeugspindel 30 in dem Träger 28 verfahren werden. In der in den Figuren 10 und 11 gezeigten Stellung kann nun das Magazinrad 34 über den Motor 44 gesteuert verdreht werden, bis das nächste ausgewählte Werkzeug 56 in der Wechselposition radial vor der Werkzeugaufnahme der Werkzeugspindel 30 positioniert ist. In dieser Stellung wird die Werkzeugspindel 30 mittels des Z-Schlittens 26 wieder radial nach außen geschoben, wodurch sich ihre Werkzeugaufnahme auf den Kegelschaft des nun positionierten nächsten Werkzeuges schiebt und diesen spannt. Mittels des Z-Schlittens 26 wird nun die Werkzeugspindel 30 mit dem gespannten nächsten Werkzeug 56 nach oben gefahren, wodurch das Werkzeug 56 aus dem Werkzeughalter 50 herausgehoben wird. Sobald sich die Werkzeugspindel 30 mit dem Werkzeug 56 oberhalb des Magazinringes 38 befindet, kann die Werkzeugspindel 30 wieder in die Arbeitsstellung gefahren werden. Das Magazinrad 34 wird wieder in die in den Figuren 2 und 7 gezeigte Grundstellung zurückgedreht, die Trennwände 32 werden geschlossen und die Bearbeitung des Werkstückes 16 mit dem neuen Werkzeug 56 kann beginnen.

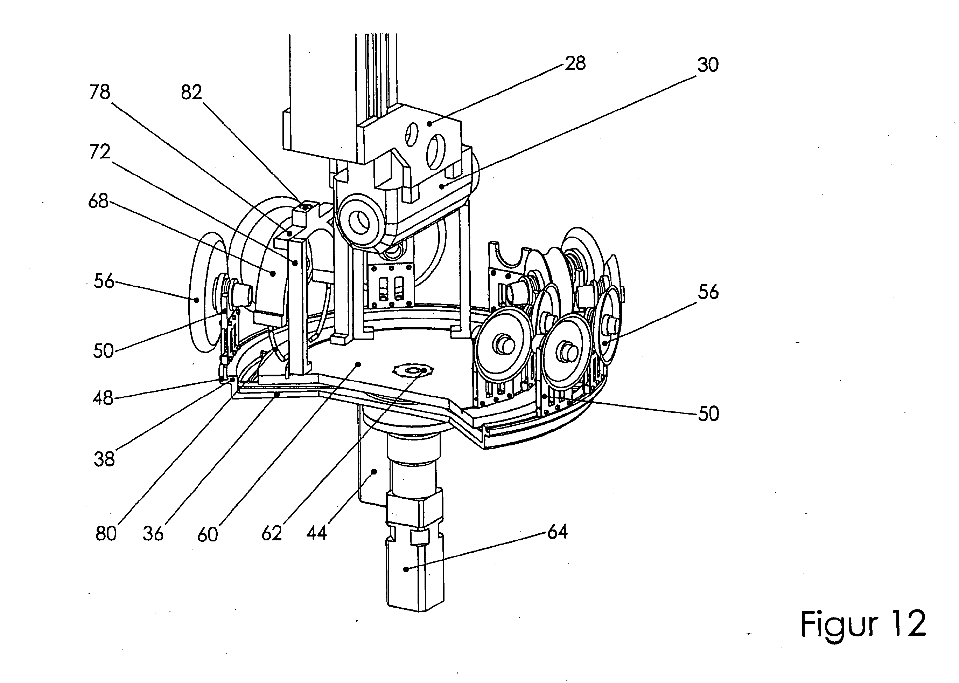

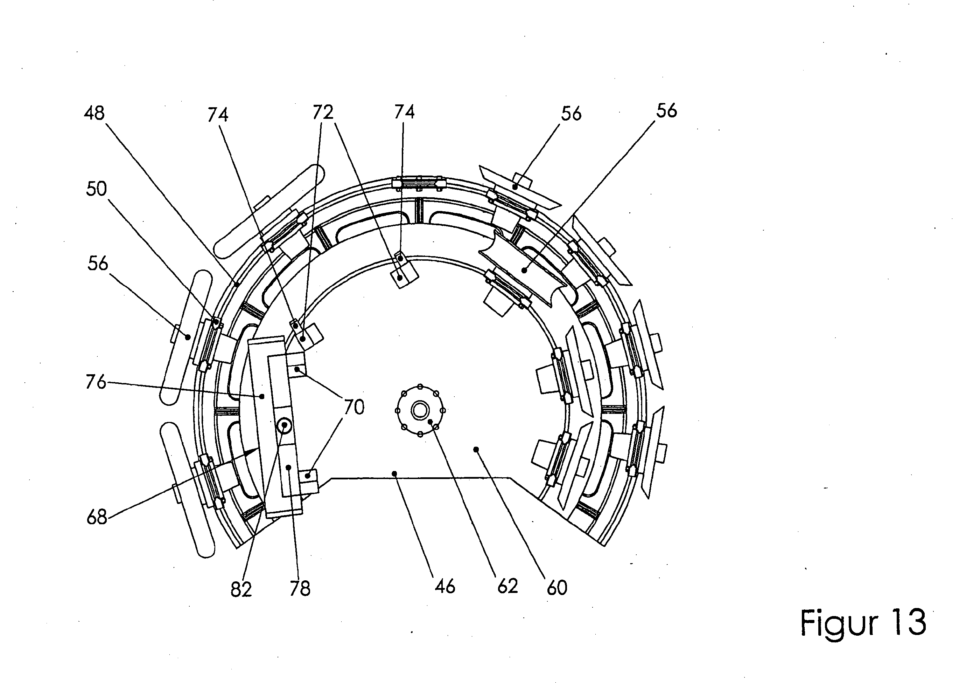

Weiter weist das Werkzeugmagazin zusätzlich zu dem ersten äußeren Magazinrad 34 ein zweites inneres Magazinrad 58 auf, wie dies insbesondere in den Figuren 12 und 13 dargestellt ist.

Das innere Magazinrad 58 ist koaxial zu dem äußeren Magazinrad 34 angeordnet und weist eine Magazinscheibe 60 auf, die konzentrisch und parallel auf der Magazinscheibe 36 des äußeren Magazinrades 34 angeordnet ist. Der Außendurchmesser der Magazinscheibe 60 ist kleiner als der Innendurchmesser des Magazinringes 38 des äußeren Magazinrades 34. Das innere Magazinrad 58 ist frei gegenüber dem äußeren Magazinrad 34 drehbar. Hierzu weist die Magazinscheibe 60 des inneren Magazinrades 58 eine vertikale zentrische Antriebswelle 62 auf, die koaxial drehbar in der als Hohlwelle ausgebildeten Antriebswelle 40 des äußeren Magazinrades 34 gelagert ist. Das innere Magazinrad 58 ist über seine Antriebswelle 62 mittels eines unterhalb des äußeren Magazinrades 34 angeordneten NC-steuerbaren Motors 64 unabhängig von dem äußeren Magazinrad 34 antreibbar.

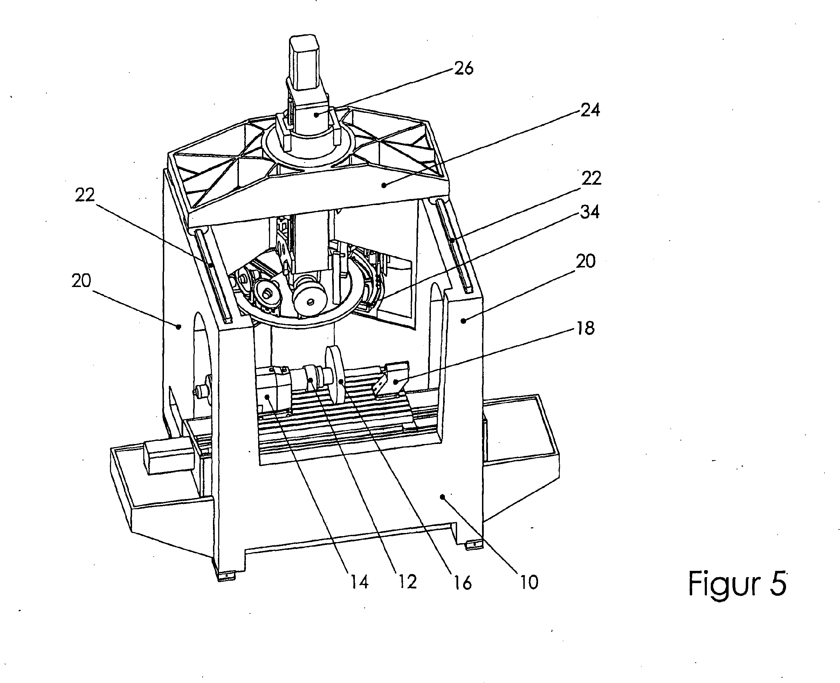

Wie Figur 5 zeigt, kann das innere Magazinrad 38 im Wesentlichen in entsprechender Weise ausgebildet sein wie das äußere Magazinrad 34. Auf der Oberseite der Magazinscheibe 60 läuft konzentrisch ein Magazinring, in welchem Werkzeughalter in ihrer Winkelposition einstellbar angeordnet und geklemmt werden können. Der Magazinring und die Werkzeughalter können in entsprechender Weise ausgebildet sein, wie dies vorstehend für das äußere Magazinrad 34 beschrieben ist. Der Magazinring mit den Werkzeughaltern ist jedoch - wie dies Figur 5 zeigt - mit einem kleineren Radius ausgebildet als die Magazinscheibe 60, sodass zwischen dem Magazinring des inneren Magazinrades 58 und dem Magazinring 38 des äußeren Magazinrades 34 ein radialer Abstand frei bleibt, welcher für die Aufnahme der in dem inneren Magazinrad 58 bevorrateten Werkzeuge 56 erforderlich ist.

Die Entnahme und Abgabe der Werkzeuge 56 in das innere Magazinrad 58 erfolgt dabei in gleicher Weise, wie dies für das äußere Magazinrad 34 vorstehend beschrieben ist. Das innere Magazinrad 58 weist ebenfalls einen Ausschnitt 46 auf, der bei Winkelausrichtung des äußeren Magazinrades 34 und des inneren Magazinrades 58 mit dem Ausschnitt 46 des äußeren Magazinrades 34 deckungsgleich ist. Insbesondere weist auch der Magazinring des inneren Magazinrades 58 einen entsprechenden Winkelausschnitt auf, damit die Werkzeuge 56 im äußeren Magazinrad 34 für die Werkzeugspindel 30 in der oben beschriebenen Weise durch diesen Ausschnitt im Magazinring des inneren Magazinrades 58 frei zugänglich sind.

Durch die unabhängige gesteuerte Einstellbarkeit der Drehpositionen des äußeren Magazinrades 34 und des inneren Magazinrades 58 können diese unabhängig voneinander in die Wechselposition gebracht werden und Werkzeuge 56 können in beliebig programmierbarer Weise alternativ in und aus dem äußeren Magazinrad 34 oder dem inneren Magazinrad 58 gewechselt werden. Das innere Magazinrad 58 erhöht somit die Zahl der Werkzeug-Speicherplätze des gesamten Werkzeugmagazins, ohne die Außenabmessungen des Werkzeugmagazins zu vergrößern.

Eine besondere Verwendung des inneren Magazinrades 58 ist in den Figuren 12 und 13 gezeigt. In dieser Ausführung dient das Werkzeugmagazin dazu, sowohl spanabhebende Werkzeuge 56, insbesondere Schleifscheiben, als auch zugehörige Schutzvorrichtungen, insbesondere einen Schleifscheibenschutz, zum Einwechseln zur Verfügung zu halten. Wie die Figuren 12 und 13 zeigen, sind in dieser Ausführung in dem äußeren Magazinrad 34 die Werkzeuge 56 in der vorstehend beschriebenen Weise bereitgehalten. Das innere Magazinrad 58 trägt die Schutzvorrichtungen, die insbesondere die Form eines Schleifscheibenschutzes haben.

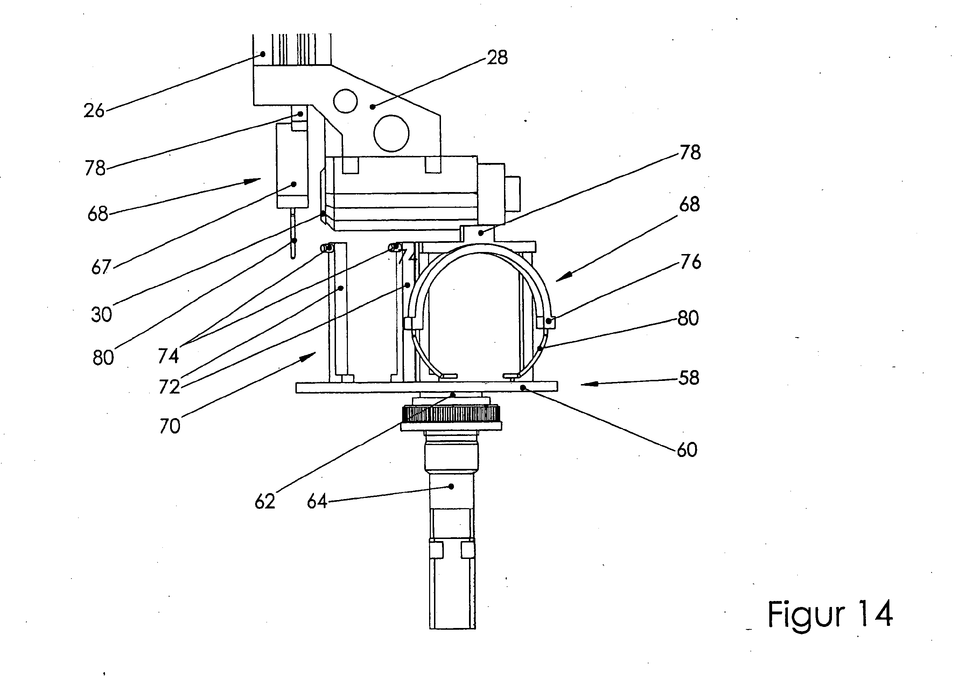

In den Figuren 14 bis 18 ist der Wechsel eines solchen Schleifscheibenschutzes 68 dargestellt. Dabei ist zur leichteren Verständlichkeit nur das innere Magazinrad 58 des in den Figuren 12 und 13 dargestellten kompletten Magazins gezeigt, während das äußere Magazinrad 34 weggelassen ist.

Auf der Magazinscheibe 60 des inneren Magazinrades 58 sind gegen dem Umfang radial beabstandet und auf einem konzentrischen Kreis im Winkel gegeneinander versetzt Schutzaufnahmen 70 angebracht. Die Schutzaufnahmen 70 bestehen jeweils aus einem Paar von senkrecht von der Magazinscheibe 60 nach oben abstehenden Trägerarmen 72, die an ihrem freien oberen Ende jeweils einen radial nach außen gerichteten Aufnahmedorn 74 aufweisen. Der Abstand der jeweils zwei Trägerarme 72 einer Schutzaufnahme 70 und die Anordnung ihrer Aufnahmedorne 74 sind so gewählt, dass ein Schleifscheibenschutz 68 auf diese Aufnahmedorne 74 aufgeschoben und durch diese getragen werden kann. Der Schleifscheibenschutz 68 besteht aus einer Schutzabdeckung 76, die den Außenumfang der Schleifscheibe teilweise abdeckt, einem oben an der Schutzabdeckung 76 angebrachten Tragbügel 78 und gegebenenfalls Kühlmitteldüsen 80. Der Tragbügel 78 verläuft horizontal und im Wesentlichen tangential zu der Schutzabdeckung 76. In den beiden Enden des Tragbügels 78 sind jeweils Bohrungen für die Aufnahmedorne 74 vorgesehen. Mittig oben in dem Tragbügel 78 ist eine vertikale Kupplungsbohrung 82 vorgesehen. An dem Träger 28 des Z-Schlittens 26 ist ein nach unten ragender Kupplungszapfen 84 vor der Werkzeugaufnahme der Werkzeugspindel 30 angeordnet, der zur Fixierung des Schleifscheibenschutzes 68 mit der Kupplungsbohrung 82 zusammenwirkt.

Figur 14 zeigt die Arbeitsstellung, in welcher entsprechend den Figuren 1 und 2 der Schleifscheibenschutz 68 an dem Träger 28 verriegelt ist und mit seiner Schutzabdeckung 76 die in Figur 14 nicht gezeigte Schleifscheibe abdeckend umgreift. Über die Kühlmitteldüsen 80 wird ein Kühlmittel auf das zu bearbeitende Werkstück 16 aufgesprüht. Das Magazinrad 58 befindet sich - ebenso wie das nicht dargestellte äußere Magazinrad 34 - in der Grundstellung, in welcher der Ausschnitt 46 mit den geschlossenen Trennwänden 32 zur Deckung kommt.

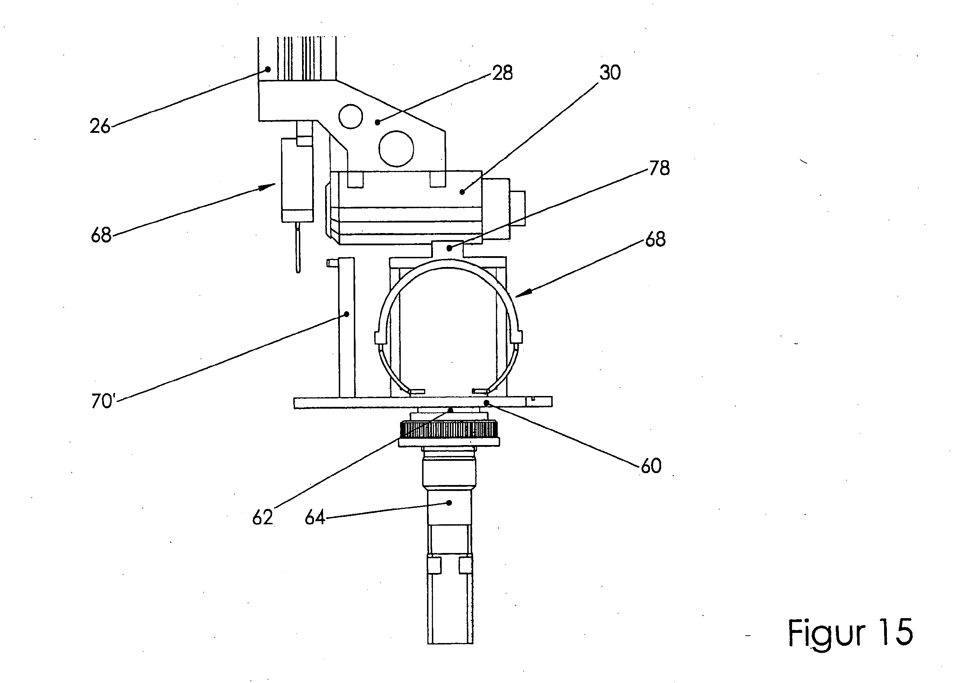

Für den Wechsel des Schleifscheibenschutzes 68 wird nach Öffnen der Trennwände 32 das innere Magazinrad 58 in die in Figur 15 gezeigte Wechselposition gedreht, in welcher eine freie Schutzaufnahme 70' dem Arbeitsraum zugewandt und in der Y-Z-Ebene des Z-Schlittens 26 ausgerichtet ist.

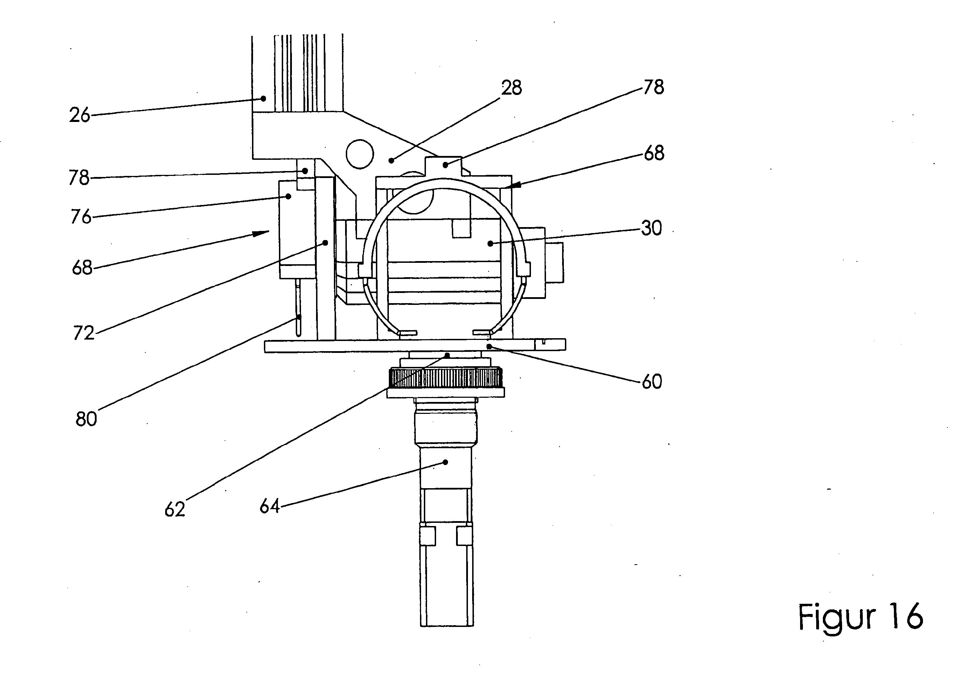

In dieser Position des Magazinrades 58 wird der Z-Schlitten 26 mit ebenfalls in der Y-Z-Ebene ausgerichteter Werkzeugspindel 30 abgesenkt, bis der an dem Träger 28 verriegelte Schleifscheibenschutz 68 vor der freien Schutzaufnahme 70' ausgerichtet ist. Dann wird der Z-Schlitten 26 mit dem Träger 28 nach hinten, d. h. in Figur 16 nach rechts, verschoben, wodurch der Tragbügel 78 des Schleifscheibenschutzes 68 auf die Aufnahmedorne 74 der freien Schutzaufnahme 70' geschoben wird. Diese Position ist in Figur 16 gezeigt.

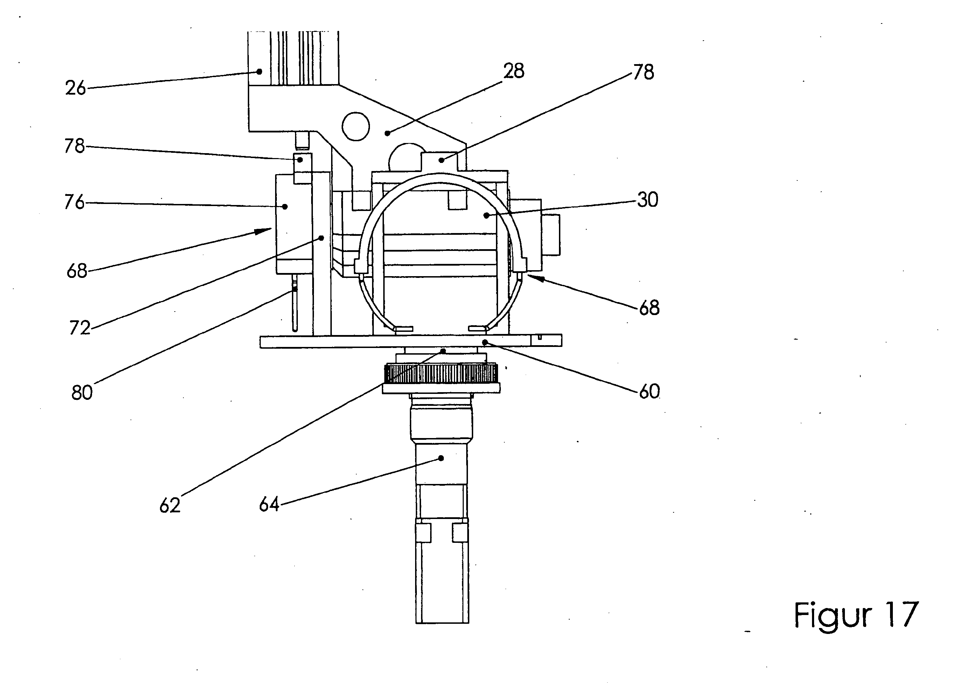

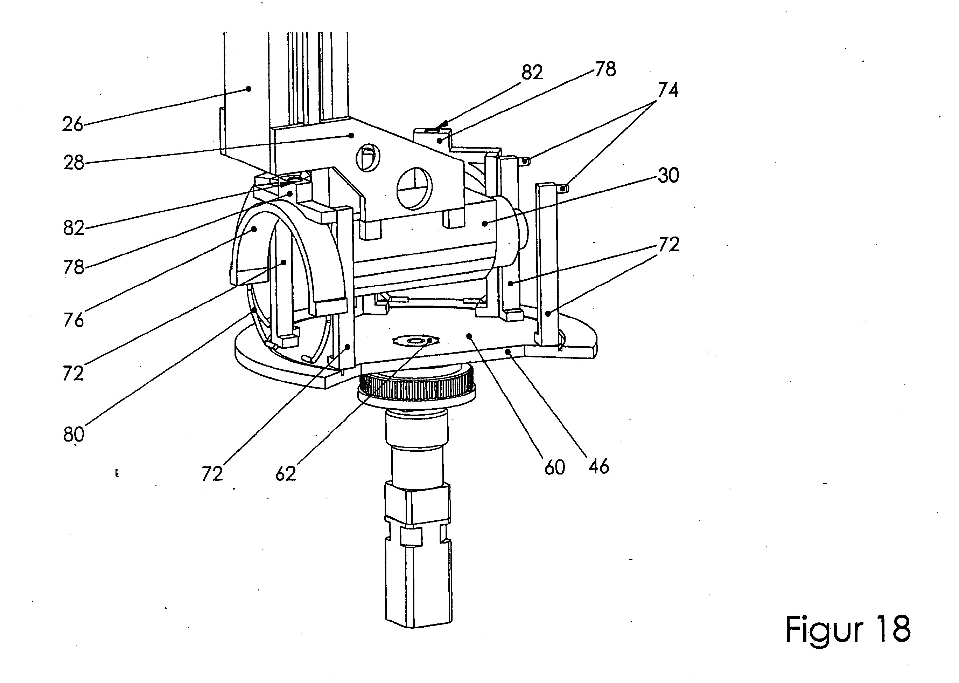

Anschließend wird der Z-Schlitten 26 vertikal nach oben gefahren, wodurch der Kupplungszapfen 84 aus der Kupplungsbohrung 82 des nun in der Schutzaufnahme 70 sitzenden Schleifscheibenschutzes 68 gezogen wird. Dies ist in den Figuren 17 und 18 gezeigt.

Nun kann das Magazinrad 58 gegenüber dem Träger 28 mit der Werkzeugspindel 30 gedreht werden, um einen anschließend einzuwechselnden Schleifscheibenschutz 68 in die Wechselposition vor der Werkzeugspindel 30 zu positionieren. Ist dies geschehen, so wird der Träger 28 mit dem Kupplungszapfen 84 wieder abgesenkt, um den neu einzuwechselnden, nun positionierten Schleifscheibenschutz 68 mit dem Träger 28 zu kuppeln. Anschließend wird der Z-Schlitten 26 mit dem Träger 28 radial nach vorn, d. h. in der Zeichnung nach links verschoben, um den eingekuppelten Schleifscheibenschutz 68 von den Aufnahmedornen 74 abzuziehen, sodass die Werkzeugspindel 30 nun mit dem neu eingekuppelten Schleifscheibenschutz 68 arbeiten kann.

Es ist ohne weiteres aus den Figuren 12 und 13 ersichtlich, dass aufgrund der unabhängig gesteuerten Verdrehbarbeit des ersten Magazinrades 34 und des zweiten Magazinrades 58 die Werkzeuge 56 und die Schutzeinrichtungen 68 unabhängig voneinander gewechselt werden können. Es können dadurch unterschiedliche Werkzeuge 56 mit verschiedenen Schutzeinrichtungen 68 beliebig kombiniert werden. Falls ein Werkzeug, z. B. in Folge von Verschleiß, gegen ein gleichartiges neues Werkzeug gewechselt werden muss, kann nur das Werkzeug gewechselt werden, während der Schleifscheibenschutz nicht ausgetauscht werden muss.

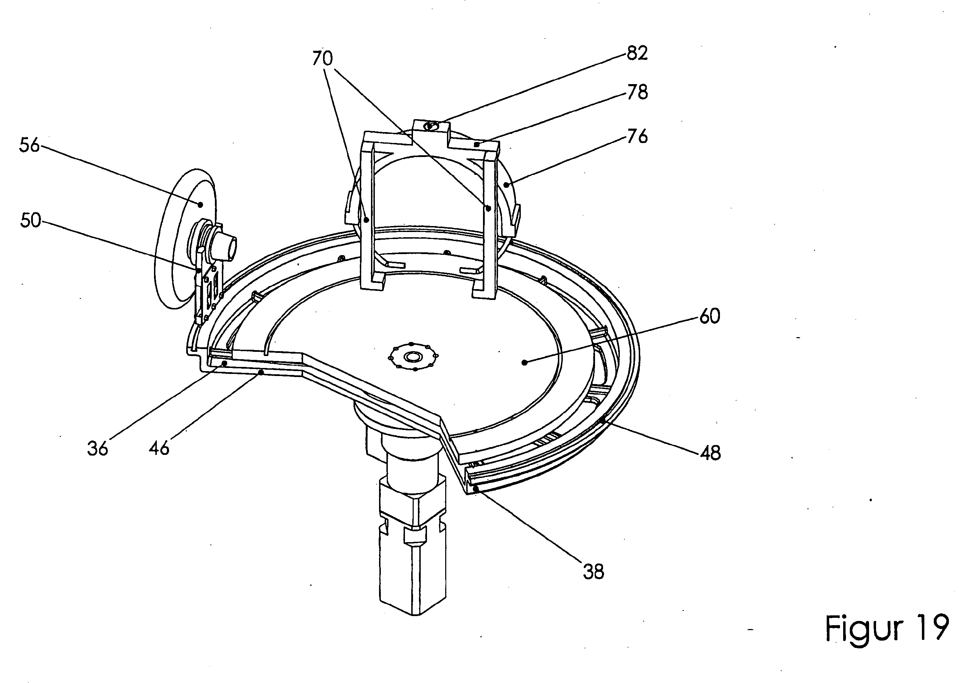

In den Figuren 19 bis 24 ist schließlich dargestellt, wie ein gleichzeitiger Wechsel eines Werkzeuges 56 und einer zugehörigen Schutzeinrichtung, z. B. eines Schleifscheibenschutzes 68, erfolgen kann. Zur einfachen und übersichtlichen Darstellung ist nur ein Werkzeug 56 in dem äußeren Magazinrad 34 und ein Schleifscheibenschutz 68 in dem inneren Magazinrad 58 dargestellt. Die übrigen Werkzeuge und Schleifscheibenschutzeinrichtungen sind weggelassen.

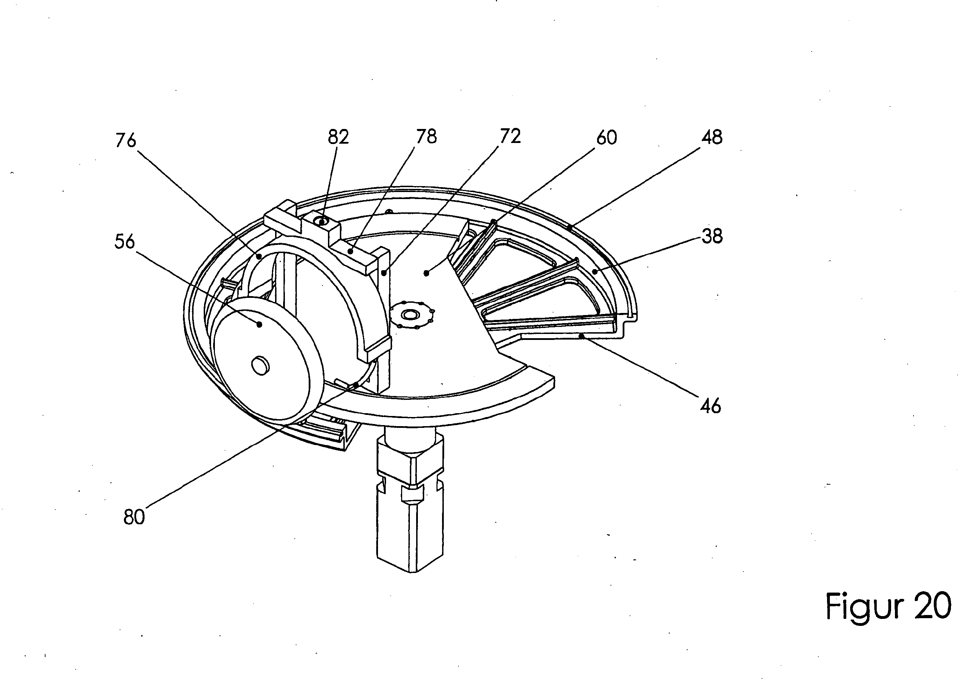

Figur 19 zeigt die Grundstellung, während der Werkstück-Bearbeitungszeit. Nach Beendigung der Bearbeitung und nach dem Öffnen der Trennwände 32 werden das einzuwechselnde Werkzeug 56 und der einzuwechselnde zugehörige Schleifscheibenschutz 68 radial fluchtend in der auf den Arbeitsraum gerichteten Wechselposition ausgerichtet, wie dies Figur 20 zeigt.

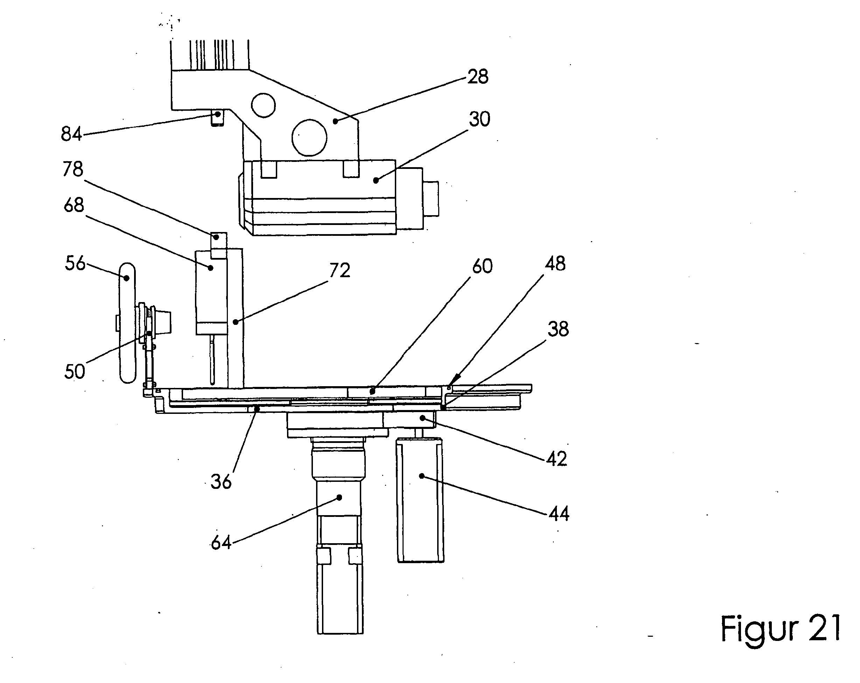

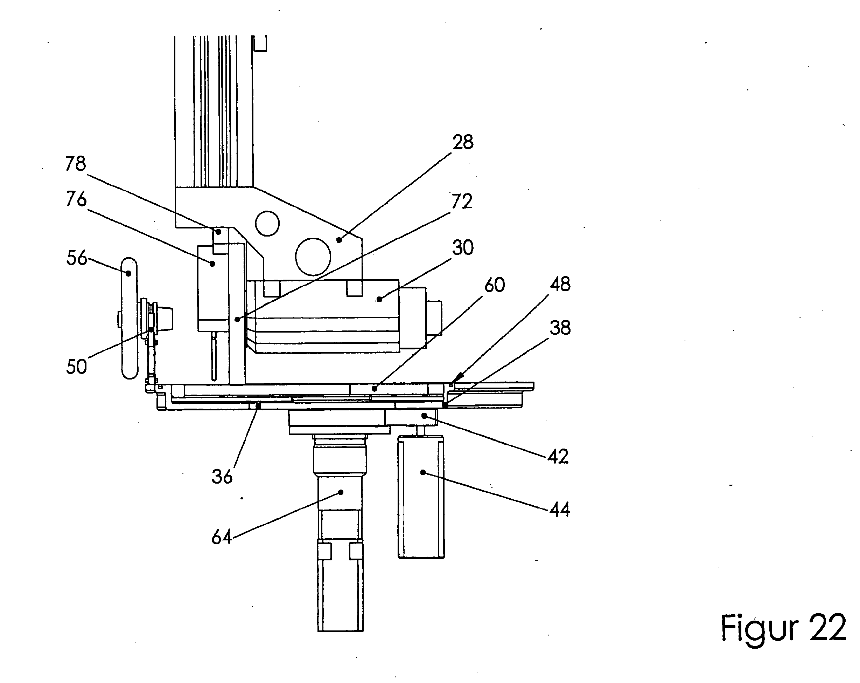

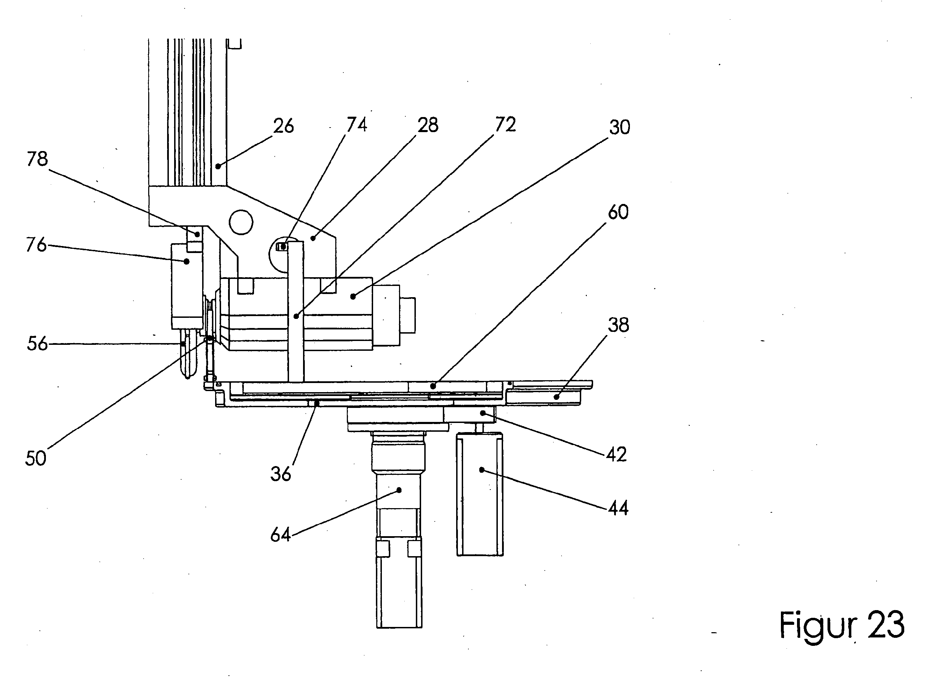

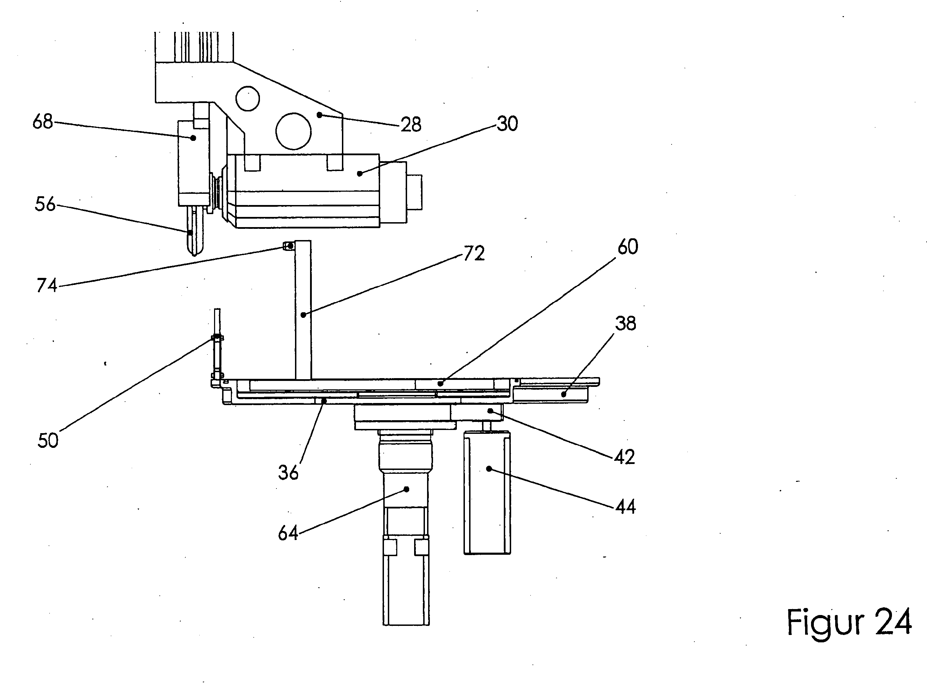

Anschließend wird der Z-Schlitten 26 mit dem Träger 28 und der Werkzeugspindel 30 oberhalb des Werkzeugmagazines über den Schleifscheibenschutz 68 gefahren, wie dies Figur 21 zeigt. Dann wird der Z-Schlitten 26 vertikal abgesenkt, wobei der Kupplungszapfen 84 des Trägers 28 in die Kupplungsbohrung 82 eingreift und der Schleifscheibenschutz 68 mit dem Träger 28 gekuppelt wird. Dies zeigt Figur 22. Anschließend wird der Z-Schlitten 26 in der Y-Achse vorgeschoben, wie dies Figur 23 zeigt. Dabei wird der über den Kupplungszapfen 84 mit dem Träger 28 gekuppelte Schleifscheibenschutz 68 von den Aufnahmedornen 74 seiner Schutzaufnahme 70 in radialer Richtung abgezogen und die Werkzeugspindel 30 wird mit ihrer Werkzeugaufnahme auf den Werkzeugschaft des Werkzeuges 56 geschoben, sodass das Werkzeug 56 an der Werkzeugspindel 30 gespannt werden kann, wie dies in Figur 23 gezeigt ist. Anschließend wird der Z-Schlitten 26 vertikal hochgefahren, sodass das Werkzeug 56 aus seinem Werkzeughalter 50 herausgehoben wird, wie dies in Figur 24 gezeigt ist. Die Werkzeugspindel 30 mit dem gespannten Werkzeug 56 und dem an dem Träger 28 gekuppelten Schleifscheibenschutz 68 können nun in den Arbeitsraum zur Bearbeitung des Werkstückes verfahren werden.

Die Abgabe eines Werkzeuges 56 und eines zugehörigen Schleifscheibenschutzes 68 in das Werkzeugmagazin erfolgt in umgekehrter Reihenfolge dieser Schritte.

### Bezugszeichenliste

- 10: Maschinenbett
- 12: Werkstückspindel
- 14: Werkstückspindelantrieb
- 16: Werkstück
- 18: Reitstock
- 20: Seitenwangen
- 22: Y-Führungen
- 24: Brücke
- 26: Z-Schlitten
- 28: Träger
- 30: Werkzeugspindel
- 32: Trennwände
- 34: äußeres Magazinrad
- 36: Magazinscheibe
- 38: Magazinring
- 40: Antriebswelle
- 42: Zahnriemen
- 44: Motor
- 46: Ausschnitt
- 48: T-Nut
- 50: Werkzeughalter
- 50': freier Werkzeughalter
- 52: Fuß
- 54: Aufnahme
- 56: Werkzeuge
- 58: inneres Magazinrad
- 60: Magazinscheibe
- 62: Antriebswelle
- 64: Motor
- 68: Schleifscheibenschutz
- 70: Schutzaufnahmen
- 70': freie Schutzaufnahme
- 72: Trägerarme
- 74: Aufnahmedorn
- 76: Schutzabdeckung
- 78: Tragbügel
- 80: Kühlmitteldüsen
- 82: Kupplungsbohrung
- 84: Kupplungszapfen

## Patentansprüche

1. Werkzeugmaschine mit einem Arbeitsraum und mit einer horizontalen Werkzeugspindel zur Bearbeitung eines in dem Arbeitsraum angeordneten Werkstückes mittels eines in der Werkzeugspindel aufgenommenen Werkzeuges, wobei die Werkzeugspindel in wenigstens einer horizontalen Achse (Y-Achse) und in der vertikalen Achse (Z-Achse) gesteuert verfahrbar ist,
**dadurch gekennzeichnet, dass** an den Arbeitsraum angrenzend ein Werkzeugmagazin angeordnet ist, welches ein um eine vertikale Achse gesteuert drehbares Magazinrad (34) aufweist, dass das Magazinrad (34) an seinem Umfang Werkzeughalter (50) aufweist, in welchen Werkzeuge (56) mit in Bezug auf das Magazinrad (34) radial ausgerichteter Werkzeugachse und mit in das Innere des Magazinrades (34) gerichtetem Schaft aufnehmbar sind, und dass die Werkzeugspindel (30) für einen Werkzeugwechsel horizontal über das Magazinrad (34) verfahrbar, vertikal in das Innere des Magazinrades (34) absenkbar und in dem Magazinrad (34) radial in Bezug zu den Werkzeughaltern (50) verfahrbar ist.

2. Werkzeugmaschine nach Anspruch 1,
**dadurch gekennzeichnet, dass** die Werkzeughalter (50) eine sich nach oben öffnende Aufnahme (54) aufweisen, in welche das Werkzeug (56) von oben eingelegt und nach oben herausgehoben werden kann.

3. Werkzeugmaschine nach Anspruch 2,
**dadurch gekennzeichnet, dass** die Werkzeuge (56) mit einer Greifrille in die Aufnahme (54) des Werkzeughalters (50) eingelegt werden, wobei sie durch ihr Eigengewicht in der Aufnahme (54) gehalten werden und durch die in die Greifrille eingreifende Aufnahme (54) gegen eine Verschiebung in Richtung der Werkzeugachse und gegen ein Verkippen der Werkzeugachse gesichert werden.

4. Werkzeugmaschine nach einem der vorhergehenden Ansprüche,
**dadurch gekennzeichnet, dass** der Arbeitsraum gegen das Werkzeugmagazin ausgewölbt ist und dass das Magazinrad (34) einen segmentförmigen Ausschnitt (46) aufweist, dessen Form der Auswölbung des Arbeitsraumes entspricht und der in der Grundstellung des Magazinrades (34) mit der Auswölbung des Arbeitsraumes zusammenfällt.

5. Werkzeugmaschine nach einem der vorhergehenden Ansprüche,
**dadurch gekennzeichnet, dass** der Arbeitsraum durch wegbewegbare Trennwände (32) gegen das Werkzeugmagazin abgeschottet ist.

6. Werkzeugmaschine nach einem der vorhergehenden Ansprüche,
**dadurch gekennzeichnet, dass** in das Magazinrad (34) konzentrisch ein weiteres inneres Magazinrad (58) einsetzbar ist, welches von dem äußeren Magazinrad (34) unabhängig gesteuert drehbar ist.

## Claims

1. A machine tool having a workspace and a horizontal tool spindle for machining a workpiece disposed in the workspace using a tool received in the tool spindle, said tool spindle being controllably movable along at least one horizontal axis (Y axis) and in the vertical axis (Z axis),
**characterised in that** a tool magazine is disposed adjacent to the workspace, which tool magazine includes a magazine wheel (34) which may be controllably rotated about a vertical axis, **in that** the magazine wheel (34) has tool holders (50) along its circumference, which can receive tools (56) having a tool axis radially orientated in relation to the magazine wheel (34) and having a shaft orientated towards the inside of the magazine wheel (34), and **in that** for a tool change, the tool spindle (30) may be moved horizontally across the magazine wheel (34), lowered vertically into the inside of the magazine wheel (34) and radially moved within the magazine wheel (34) in relation to the tool holders (50).

2. The machine tool as claimed in Claim 1, **characterised in that** the tool holders (50) have a receptacle (54) which is open towards the top, into which receptacle the tool (56) may be inserted from the top and from which it may be lifted out.

3. The machine tool as claimed in Claim 2, **characterised in that** the tools (56) are inserted in the receptacle (54) of the tool holder (50) by a gripping groove, which tools are held in the receptacle (54) by their own weight and are secured by the receptacle (54) engaging in the gripping groove against displacement in the direction of the tool axis and against tilting of the tool axis.

4. The machine tool as claimed in any one of the preceding claims, **characterised in that** the workspace has an outward protuberance against the tool magazine and **in that** the magazine wheel (34) has a segment-shaped cutout (46), the form of which conforms to the outward protuberance of the workspace and which coincides in the base position of the magazine wheel (34) with the outward protuberance of the workspace.

5. The machine tool as claimed in any one of the preceding claims, **characterised in that** the workspace is isolated from the tool magazine by removable separation walls (32).

6. The machine tool as claimed in any one of the preceding claims, **characterised in that** a further innner magazine wheel (58) may be concentrically inserted into the magazine wheel (34), which may be controllably rotated independently from the outer magazine wheel (34).

## Revendications

1. Machine-outil comportant un espace de travail et une broche porte-outil, horizontale pour usiner une pièce installée dans l'espace de travail à l'aide d'un outil logé dans la broche porte-outil,
la broche porte-outil étant mobile de manière commandée suivant au moins un axe horizontal (axe Y) et l'axe vertical (axe Z),
**caractérisée en ce qu'**
- un magasin d'outils est installé de façon adjacente à l'espace de travail, ce magasin comportant un magasin-roue (34) tournant de façon commandée autour d'un axe vertical,
- le magasin-roue (34) comportant à sa périphérie des porte-outil (50) logeant des outils (56) avec chacun un axe d'outil aligné radialement par rapport au magasin-roue (34) et ayant un axe dirigé vers l'intérieur du magasin-roue (34), et
- la broche porte-outil (30) est mobile horizontalement au-delà du magasin-roue (34) pour un changement d'outil et elle peut être descendue verticalement à l'intérieur du magasin-roue (34) et être déplacée dans le magasin-roue (34) radialement par rapport au porte-outil (50).

2. Machine-outil selon la revendication 1,
**caractérisée en ce que**
le porte-outil (50) comporte un logement (54) s'ouvrant vers le haut dans lequel l'outil (56) se place ou s'extrait vers le haut.

3. Machine-outil selon la revendication 2,
**caractérisée en ce que**
les outils (56) sont placés avec une rainure de préhension dans le logement (54) du porte-outil (50), en étant tenus par leur propre poids dans le logement (54) et en étant bloqués en coulissement dans la direction de l'axe de l'outil et protégés contre le basculement de l'axe de l'outil, par le logement (54) venant prendre dans les rainures de préhension.

4. Machine-outil selon l'une des revendications précédentes,
**caractérisée en ce que**
l'espace de travail est bombé en direction du magasin d'outils, et
- le magasin d'outils (34) comporte une découpe (46) en forme de segment correspondant à la partie bombée de l'espace de travail et coïncidant avec la partie bombée de l'espace de travail en position de base du magasin-roue (34).

5. Machine-outil selon l'une des revendications précédentes,
**caractérisée en ce que**
l'espace de travail est séparé du magasin d'outils par des cloisons escamotables (32).

6. Machine-outil selon l'une des revendications précédentes,
**caractérisée en ce que**
concentriquement, le magasin-roue (34) comporte un autre magasin-roue (58), intérieur, tourné de manière commandée indépendamment de la roue-magasin (34), extérieure.
